# EUROPEAN PATENT APPLICATION

(11) **EP 2 348 463 A1**
(43) Date of publication of application: **27.07.2011**
(21) Application number: 09180951.7
(22) Date of filing: 30.12.2009
(51) Int. Cl.: G06Q 10/00, G06Q 50/00

(54) **Logistics monitoring system**

(30) Priority: 21.12.2009 GB 0922222
(71) Applicant: Hertz Europe Limited, Uxbridge, Middlesex UB8 1QE (GB)
(72) Inventor: Lindberg, Lesley, Uxbridge, Middlesex UB8 1QE (GB)
(74) Representative: Fox, Nicholas Russell Philip

(57) **Abstract**

An apparatus (1) for monitoring the allocation of vehicles (8) to pick up locations is described which includes a location database (22) storing data (40) associating a plurality of locations with group data (46); a vehicle database (20) storing data (30) associating vehicles (8) with location data (34); a user database (24) storing data (50) associating individual users with group data (56); a booking system (25,28) and an administrator module (26). The booking system (25,28) is operable to generate booking records (60) recording bookings for the use of vehicles (8), restricting the generation of booking records (60) for the collection of vehicles (8) from specified locations by specified users on the basis of the group data (46,56) associated with users and locations by data (40,50) stored in the location database (22) and user database (24). The administrator module (26) monitors the extent that vehicles (8) are required to be transferred to locations associated with group data (46) in order to satisfy bookings recorded in the booking system (25,28) where the availability of a vehicle (8) for use at a particular location is determined on the basis of the location data (34) associated with the vehicle (8) and the booking records (60) generated by the booking system (25,28) indicative of the use of that vehicle (8).

## Description

The present application concerns a logistics monitoring system. In particular the present application concerns a logistics monitoring system for use in tracking and assessing the allocation of resources in a vehicle hire business.

The car and vehicle rental business is both capital and resource intensive. In addition to owning and maintaining a fleet of vehicles, any such business must also provide locations where customers can collect a vehicle at the beginning of a hire period and return a vehicle after use. Such facilities need to be manned in order for the cars to be checked in and out and to deal with any customer problems.

In recent years car hire clubs have arisen as an alternative to the conventional car hire businesses. In a car club, when someone joins the car club such a member is able to book and hire any of the cars owned by the club. Typically such cars are provided at a large number of locations across a city. After booking a car using a booking system a car club member then travels to the chosen car. The member is then able to drive the car away once the member's identity is confirmed. This can be achieved in a number of ways including providing a user with a rf (radio frequency) ID card which is used to unlock a car or alternatively a user can be provided with an ID number that they are required to enter before the car ignition will be activated at the beginning of the hire period.

Both conventional car hire centres and car clubs present significant logistical problems. The main limit on the effectiveness of car clubs is the distance that customers are prepared to travel to pick up a car. For this reason, car clubs can only be successful if large numbers of cars are provided for use within a small area so that if one car is in use an alternative will be available at a nearby location. This requires both that a large number of vehicles are owned and maintained and also requires that the car club has access to a large number of parking spaces.

The need to match cars and parking spaces is particularly acute where a driver wishes to collect a car from one location and leave the car at another. At present this normally involves a car being parked in a temporary location and the car hire company having to send out someone to return the car to its original location. This can mean that a car is unavailable for use by others for a period of time and also frequently requires significant manpower as the person who is to return to a car to its normal location must themselves be delivered to the car. It is therefore necessary for two people to be involved in relocating the car back to its normal hire location.

A similar problem arises in a conventional car hire business where cars are delivered to customers own addresses. This frequently arises in a corporate environment where a car hire company provides a number of cars to a business to be used by that business. Such cars are then available for use by the business's employees on an as and when basis. The number of cars involved can be varied depending upon business requirements making the arrangement more convenient than the business owning and running its own fleet. If any maintenance issues arise a car can be collected by the car hire business and a replacement car provided. However, in order to provide such flexibility a means must be provided to deliver and remove cars to and from a suitable corporate location.

As such deliveries are manpower intensive, it is desirable to provide means by which the provision of cars and other vehicles may be monitored so that deliveries are managed in an efficient manner.

In accordance with one aspect of the present invention there is provided an apparatus for monitoring the allocation of vehicles to pick up locations comprising: a location database storing data associating a plurality of locations with group data; a vehicle database storing data associating vehicles with location data; a user database storing data associating individual users with group data; a booking system operable to generate booking records recording bookings for the use of vehicles, wherein the booking system is configured to restrict the generation of booking records for the collection of vehicles from specified locations by specified users on the basis of the group data associated with users and location by data stored in the location database and user database; and an administrator module operable to monitor the extent that vehicles are required to be transferred to locations associated with group data in order to satisfy bookings recorded in the booking system wherein the availability of a vehicle for use at a particular location is determined on the basis of the location data associated with the vehicle and the booking records generated by the booking system indicative of the use of that vehicle.

In embodiments of the present invention a plurality of vehicles are monitored by the apparatus wherein each of the vehicles is operable to generate data identifying a current location of the vehicle and transmit said data to said apparatus and the apparatus for monitoring the allocation of vehicles is operable to store said data as location data associated with the vehicle. A comparison between location data received from vehicles and with data defining locations is the location database and a vehicle is associated with a location on the basis of the comparison. Typically such a comparison is made at a time determined on the basis of an end time for a booking associated with the vehicle by a booking record generated by the booking system.

A monitoring apparatus in accordance with the present application is of particular use for monitoring vehicles at locations with an intermediate number of available vehicles. At large busy hire locations, typically large numbers of vehicles are available for use at anyone time. This means that allocating vehicles on an as and when basis is relatively straight forward as a significant number of alternative vehicles are available. Conversely in the case of a typical car club arrangement the numbers of vehicles for hire from a particular location are very limited and the varying that number may be impossible due to limited parking facilities at a particular location.

However, where a limited number of vehicles are made available at a particular location and the numbers of those vehicles may vary overtime, it becomes important to be able to balance demand for vehicles at a location and the need to make arrangements to ensure that those vehicles are available to at location.

Further aspects and embodiments will become apparent from the following description and accompanying drawings in which:
Figure 1 is a schematic block diagram a logistics monitoring system in accordance with an embodiment of the present invention;
Figure 2 is a schematic block diagram of a vehicle record stored within the vehicle database of the logistics monitoring system of figure 1;
Figure 3 is a schematic block diagram of a location record stored within the location database of a logistics monitoring system of figure 1;
Figure 4 is a schematic block diagram of a user record stored within the user database of a logistics monitoring system of figure 1;
Figure 5 is a schematic block diagram of a booking record stored within the booking database of a logistics monitoring system of figure 1;
Figure 6 is a flow diagram of the interaction of a user with the logistics monitoring system of Figure 1;

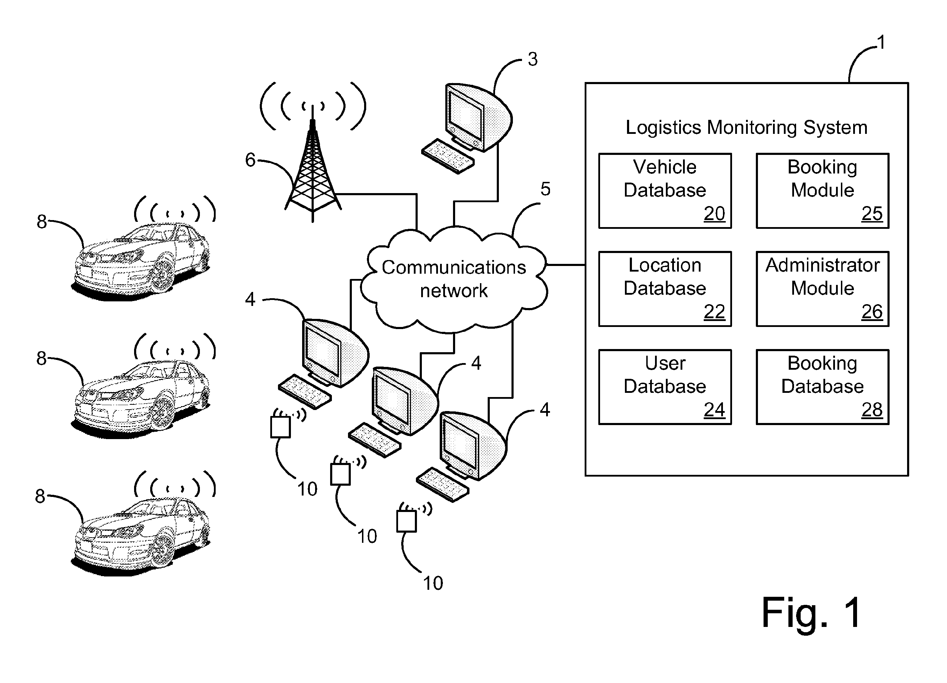

Referring to Figure 1, in accordance with an embodiment of the present invention a logistics monitoring system 1 is provided which is connected to an administrator terminal 3 and a number of client terminals 4 via a communications network 5. The communications network 5 is also arranged to transmit and receive data via a radio link 6 from a number of cars 8. In this embodiment access to the cars 8 is controlled through the use of rf ID cards 10 which are provided to users of the system.

As will be described in detail later, in accordance with the present invention, the logistics monitoring system is configured into a number of functional modules 20 -28 which act to associate certain vehicles, bookings, locations and users with specific user groups. This association is then utilised to tailor the representation of car availability to users of the client terminals 3 to restrict access and bookings of certain vehicles to users associated with specific groups. The monitoring of the use of those vehicles and the allocation of certain vehicles to and from certain groups in the monitoring system 1 then enables physical resources to be allocated more efficiently than in the prior art.

In this embodiment, the functional modules 20-28 of the logistics monitoring system 1 comprise: a vehicle database 20 configured to associate data relating to vehicles 8 monitored by the system with group data; a location database configured to associate locations monitored by the system with group data; a user database configured to associate data identifying individuals and rf ID cards with group data; a booking module 25 enabling users of the client terminals 25 to book vehicles for use; an administrator module 26 enabling a user of the administrator terminal 3 to monitor bookings and the availability of vehicles 8 and to allocate and reallocate vehicles to different groups and a booking database 28 configured to store booking data for bookings made via the booking module 25.

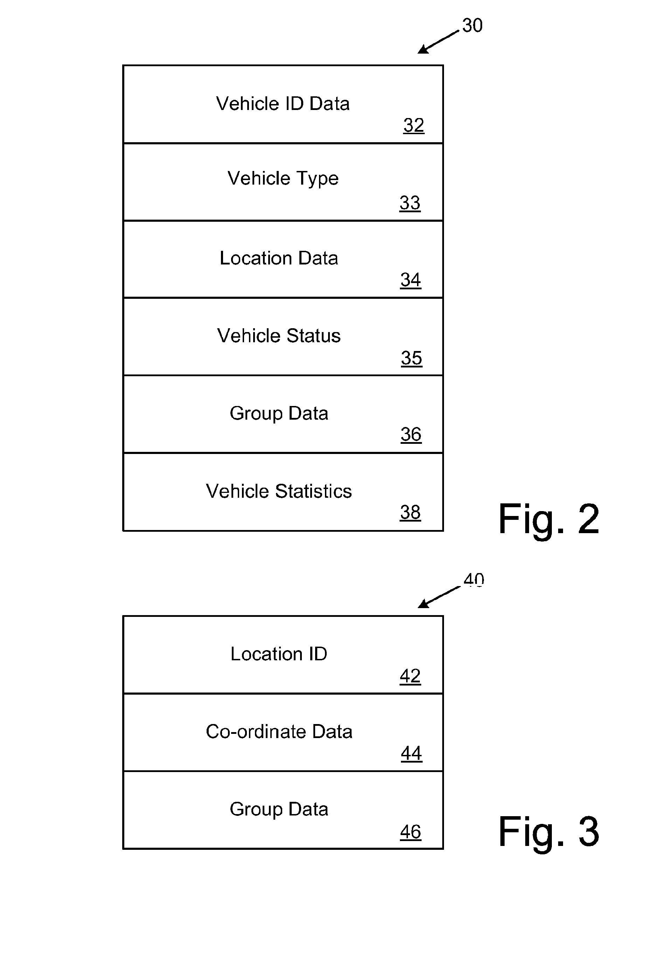

Before describing in detail the interactions of the booking module 25 and the administrator module 26 with the vehicle database 20; the location database 22; the user database and the booking database 28, the structures of records stored in the vehicle database 20; the location database 22; the user database 24 and the booking database 28 will first be described with reference to Figures 2 - 5.

Figure 2 is a schematic block diagram of a vehicle record 30 stored within the vehicle database 20 of the logistics monitoring system. In this embodiment a vehicle record comprises: vehicle ID data 32; vehicle type data 33, vehicle location data 34, vehicle status 35; group data 36 and vehicle statistics 38.

The vehicle ID data 32 comprises a unique identifier such as a vehicle registration number to link a specific vehicle record 30 to a specific vehicle 8 which is to be monitored by the logistics monitoring system 1.

The vehicle type data 33 of a vehicle record 30 comprises data defining the type of the vehicle in question for example whether a car is a compact, mid-size or luxury vehicle.

In this embodiment, each of the vehicles 8 which is to be monitored is provided with a GPS location system and a radio transmitter which is arranged to transmit GPS data for the vehicle 8 periodically (for example every 10 minutes) so that the location of the vehicle can be tracked. This data is then sent via the radio link 6 and the communications network 5 and recorded as vehicle location data 34 in the vehicle record associated with that vehicle 8.

The vehicle status data 35 in the vehicle record 30 is a flag indicating the current rental status for the associated vehicle 8. Typical vehicle statuses would be: currently rented; waiting for pick up; available for hire and scheduled for maintenance.

The group data 36 associated with a vehicle record 30 is indicative of a group to which a vehicle is assigned. As will be described in detail later, this group data 36 together with the vehicle status data 35 and the group data of records within the user database 24 and the booking database 28 is used to co-ordinate the transfer of vehicles 8 to the exclusive use of particular groups and to assist in monitoring the management and allocation of resources to assist in avoiding unnecessary transfer of vehicles between sites.

In this embodiment , in addition to being arranged to transmit GPS location data via the radio link 6 the vehicles 8 being monitored are also arranged to transmit data concerning the current state of the vehicle 8 as detected by monitors within the vehicle 8. Typical vehicle statistics 38 could include for example the car's current mileage and current readings from the vehicle's fuel tank.

Figure 3 is a schematic block diagram of a location record 40 stored within the location database 22 of the logistics monitoring system 1. In this embodiment each of the location records comprises data defining a location where a vehicle 8 can be hired from or returned to. Each location record comprises a location identifier 42 identifying a specific hire and return location; co-ordinate data 44, defining a set of GPS co-ordinates corresponding to the location; and group data 46 indicating the groups of users for which the location is relevant as a hire or return location. As will be described, when GPS co-ordinates are received from a vehicle 8, those GPS co-ordinates are checked against co-ordinate data 44 for hire and return locations. If the location corresponds to a hire or return location relevant for the current user of the vehicle 8, a user can signal the end of a hire period to the logistic monitoring system so that a rental is considered to come to an end.

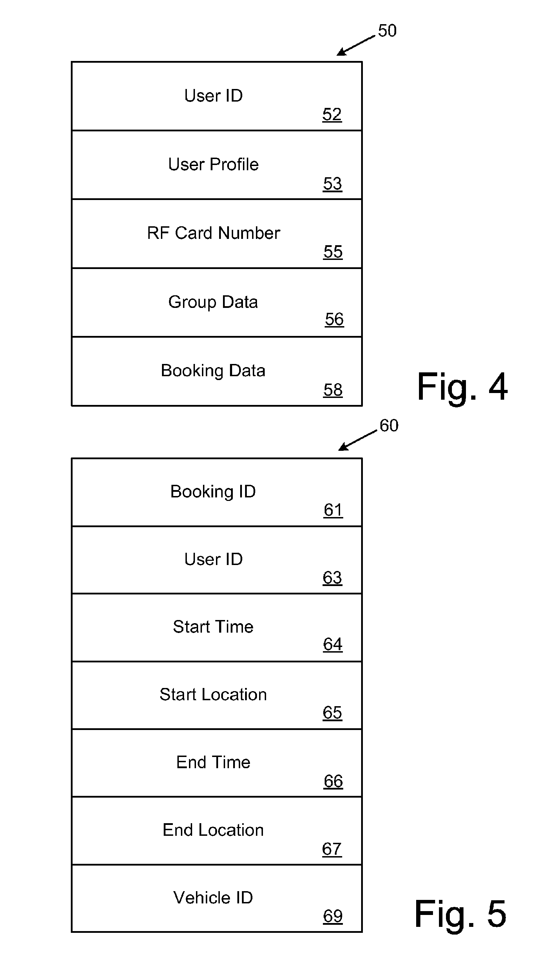

Figure 4 is a schematic block diagram of a user record 50 stored within the user database 24 of the logistics monitoring system 1. In this embodiment each user record 50 comprises: a user identifier 52 being a unique identifier for a specific user; user profile data 53 being information relating to that individual user such as name, address, driving licence details etc enabling a user to obtain a booking for vehicle; an rf card number 55 corresponding to a number encoded on a rf card 10 issued to the user to enable the user to identify themselves to a vehicle 8 equipped with a rf reader; group data 56 associating the user with a specific group of individuals; and booking data 58 being a set of pointers to booking records stored in the booking database 28 relating to the user identified by the record 40.

Figure 5 is a schematic block diagram of a booking record 60 stored within the booking data base 28 of the logistics monitoring system 1. Each booking record 60 in the booking database 28 records data relating to a booking request for the use of the vehicles 8 monitored by the logistics monitoring system 1. In this embodiment each booking record 60 comprises: a booking identifier 61 being a unique booking reference for the booking; a user identifier 63 corresponding to the user identifier 52 associated with a user who has made a booking; and a start time 64, start location 65, end time 66, end location 67 and vehicle ID data 69 for the rental defined by the booking record 60.

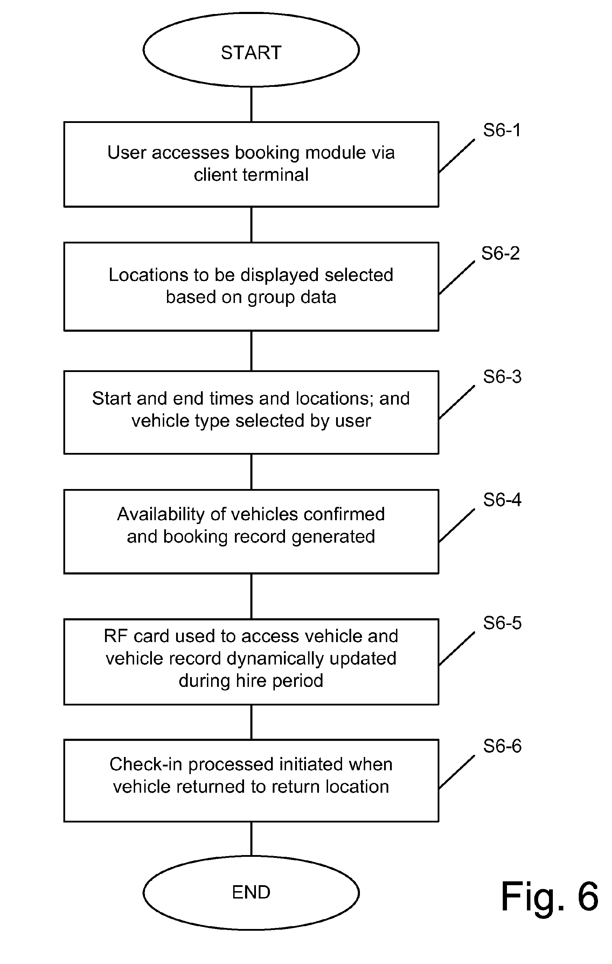

The interaction of a user with the logistics monitoring system 1 will now be described with reference to Figure 6.

When a user wishes to book a vehicle for use, the user accesses (s6-1) the booking module 25 of the logistics monitoring system 1 using one of the client terminals 4. In order to indentify the user, a user will be prompted to provide data which can be checked against the user profile 53 or user ID 52 of user records 50 stored in the user database 24.

Having received data enabling a specific user record 50 to be identified, the booking module 25 will then generate (s6-2) a user interface enabling a user to enter details for a requested hire. As part of the user interface for entering requested hire details, a user is presented with a selection of hire locations from where a vehicle can be collected and returned to. In accordance with the present invention, these locations are selected on the basis of the group data 56 of the user record 50 associated with the user making the booking.

More specifically, when a user has been associated with a particular user record on the basis of a match between input data and the user identifier 52 or user profile data 53 of a stored user record 50, the group data 56 of that record is then compared with the group data 46 of the location records 40 in the location database 22. A user is then presented with a user interface for selecting start and end locations from the location identifiers 42 of the locations where the group data 46 of the location records 40 matches the group data 56 for the user record 50 associated with that user.

In this way a user is presented with a user interface where the user is able to select start and return locations from a subset of the locations for which location records 40 are stored. Limiting the start and return locations in this way has a number of effects.

Thus for example, in a simple case location records 40 might be stored where group data 46 is of two types, a general type say corresponding to a hire company's national network of retail locations and a customer specific type corresponding to a location associated with a single customer, say for example the car park of a specific corporate organisation.

When a customer accessed the logistics monitoring system 1 the group data 56 associated with the user's user record 50 would then determine whether the user was presented only start and end locations associated with the general type (i.e. the hire company's national network of retail locations) or whether the group data included data corresponding to a specific customer corresponding to the car park of a specific corporate organisation. Thus in this way where location records 40 for a customer specific location are stored, users associated with that specific can be presented with additional options as to where a vehicle 8 may be obtained. Conversely, although certain user's may obtain vehicles 8 from such customer specific locations, the option of obtaining a vehicle 8 from those locations will not be presented to users who are not associated with that organisation.

Having been presented with a user interface for entering booking data, a user then (s6-3) proceeds to enter the booking data for a desired hire period. This data will include details of the desired start time, hire duration and pick up and delivery locations for the hire as well as details of the vehicle type for the desired hire. As the pick up and delivery locations which a user can select will be controlled by the booking module 25, a user will only be able to identify pick up and delivery locations which are associated with the group data 56 included in their user record 50.

When booking data has been entered into the client terminal 4 it is transmitted via the communications network to the logistics monitoring system 1, the booking module then (s6-4) proceeds to check whether a vehicle 8 of the required vehicle type will be available at the desired location for the desired hire period.

This can be achieved in a number of ways. Where a booking is made sufficiently far in advance that it is feasible that a suitable vehicle can be made available at the desired location the availability of a suitable vehicle can be assumed unless the number of vehicles to be hired on that particular day exceeds a preset threshold.

Where a booking is made a short period of time in advance, the number of available vehicles of a particular vehicle type at a particular location which are currently not in use can be determined on the basis of the vehicle type data 33 and location data 33 for vehicle records 30 which include vehicle status data 35 indicating that a vehicle is available for hire. The booking database 28 can then interrogated to establish on the basis of the booking records 60 how the availability of vehicles will change before the beginning of the desired hire period. That is to say the booking records 60 with start location data 65 or end location data 67 corresponding to the desired start location are identified. These records are then filtered to identify rentals and returns which would affect the availability of vehicles at the desired start location and the number of available vehicles of the desired type at the desired start time is then calculated.

If a suitable vehicle is available at the desired time and at the desired location, the booking then proceeds to generate a booking record 60 comprising a new booking identifier 61, a user identifier 63 corresponding to the user identifier 52 of the user record 50 used to confirm the user's identity, a start time 64, start location 65, end time 66 and end location 67 corresponding to the user's desired times and locations. The vehicle identifier 69 of the record is then set to the vehicle identifier 32 for a vehicle 8 of the desired type determined to be available for the desired hire period or in this embodiment is set to a value identifying the requested vehicle type in the case of a booking for a hire for a significant period in advance.

Having generated a booking record 60, the booking data 58 for the user record 50 with a user identifier 52 corresponding to the user identifier 63 in the newly generated record 60 is updated to include a reference to the newly created booking record 60.

Subsequently when (s6-5) the user wishes to use the vehicle 8 that they have booked, the user takes their rf card 10 to the start location for the hire. An rf card reader provided within the vehicle 8 reads the rf card number encoded in the rf card 10 and checks that this number corresponds to the rf card number 55 of the user record 50 including a user identifier 52 which corresponds to the user identifier 63 of a booking record 60 with a start time 64 at around the present time and including vehicle identification data 69 corresponding to the vehicle. This could be achieved by the vehicle accessing the logistics monitoring system 1 in real time or alternatively the relevant data could be transmitted to and stored by the vehicle 8 prior to the hire period.

When the identity of the user has been confirmed using the rf card, the vehicle 8 is then caused to be unlocked so that the user can access the vehicle 8 and drive it away. Accessing and driving the vehicle 8 then causes the vehicle 8 to begin transmitting data to update the vehicle record 30 associated with the vehicle 8. More specifically, the vehicle statistics 35 of the vehicle record 30 associated with the vehicle 9 is change to indicate that the vehicle is in use and the location data 33 and vehicle state data 38 are periodically updated whilst the vehicle 8 is in use.

Whenever the location data 33 of a vehicle record 30 of a vehicle 8 in use is updated, the logistics monitoring system 1 checks whether the location data 33 corresponds to the co-ordinate data 44 of the location record 40 corresponding to the end location 67 for the current booking of the vehicle 8. If this is the case, this will indicate that the vehicle 8 is in the vicinity of the drop off location for the current hire. If the vehicle 8 comes to a halt for a predetermined period of time and the current time is close to the expected end time 67 for the current hire then the rental is recorded as coming to an end and the vehicle status 35 for the vehicle 8 is set to available for hire and the vehicle 8 inactivated until an rf card 10 corresponding to a new booking is read.

From the above it will be apparent that from a user's perspective, the logistics monitoring system 1 enables a user to reserve and use vehicles on an as and when basis. As noted above, the group data 46, 56 within the system enables the system to restrict the availability of pick up and delivery locations to specific groups of users. It will also be noted that in the above described system, the availability of vehicles 8 for hire in the near future is determined on the basis of the current availability of vehicles 8 and the manner in which such availability is expected to change due to the existing booking records.

In the case of bookings further in advance as described above such bookings are not assigned to a specific vehicle at the time of the booking. Rather a booking record with vehicle ID data 69 identifying a vehicle type is created. These records enable the demand for vehicles 8 of a particular type at a particular location sometime in advance to be monitored without assigning specific vehicles 8 to specific hire periods. This demand for vehicles 8 of specific types from specific locations can then be monitored by accessing the administrator module 26 using the administrator terminal 3.

A preset time in advance specific vehicles can be allocated to rentals by processing the booking records 60 with vehicle ID data 69 identifying a particular vehicle type in a similar manner to a booking request to determine whether a vehicle of a desired type will be available at a particular location at the desired times. If this is the case the booking record 60 can be updated to include vehicle ID data 69 corresponding to the vehicle ID data 32 associated with the vehicle 8 which will be used and a user can be sent information about the vehicle assigned to them.

If it is determined at any point that no vehicles 8 of a requested type are available at a desired type, this information is logged by the administrator module 26 and an administrator using the administration terminal 3 is contacted. The administrator can then either identify whether any alternative vehicles 8 are available at the requested location at the desired time which could be provided as an alternative and amend the request accordingly so that a vehicle can be assigned to the booking. Alternatively, when attempting to allocate vehicles a preset time in advance the unavailability of a vehicle of a desired type may be resolved by sending a vehicle from one location to another.

In addition to restricting the availability of certain pick up and drop off locations to users on the basis of group data 46,56, the group data 36 within vehicle records 30 can be used to associate specific vehicles to specific groups. That is to say the availability and allocation of vehicles 8 to users can be restricted to users with user records 50 sharing group data 56 with the group data 36 of specific vehicles. This would be achieved by causing the booking module 25 to assign vehicle id data 69 to booking records 60 only where the group data 36 of a vehicle record 30 matched the group data 56 of the user record 50 for a user making a booking. Such restriction would be of particular use where for example a group corresponded to a particular corporate entity and the vehicles 8 in question where on long term lease to that entity. This would enable the vehicles 8 in question to be reserved for the exclusive use of that entity.

A significant benefit of the described logistics monitoring system 1 is that data can be collected to identify the numbers of vehicles 8 assigned to each group and the transfer of vehicles 8 between locations. From this optimum allocations of vehicles 8 to locations and groups can be determined which maximise the use of vehicles 8 whilst minimising the numbers of required vehicle transfers taking in account the occasional unavailability of vehicles due to rental overruns and maintenance requirements.

Thus for example over a period of time it might be determined that the booking records 60 within the booking database 28 indicates that the demand for vehicles 8 of a particular type at a particular location varies between X and Y vehicles. If this were to be the case then allocating X vehicles of that type to a group associated with that particular location would guarantee that all X vehicles were consistently available for use but additional vehicles 8 would have to be provided when demand exceeded X vehicles 8. In contrast assigning Y vehicles to a group associated with a location would ensure that vehicles were always available but would mean that for certain periods of time some vehicles 8 were unused. The actual numbers of vehicles 8 to be assigned could then be selected on the basis to balance the numbers of required deliveries and the demand and use of the vehicles.

In addition to determining appropriate allocation of vehicles 8 to locations, data within the logistics monitoring system 1 could also be utilised to select which vehicles 8 should be transferred between groups to manage the allocation of resources most effectively. Thus for example where vehicles 8 assigned to one particular group were found to be involved in a significant number of one-way trips to a certain location such as an airport, it might be determined that reallocating such vehicles to a general group upon arrival was an efficient manner of maximising the use of the vehicles 8.

In systems where vehicles are reallocated between groups, the total numbers of vehicles allocated to a particular group could be monitored so as to ensure that a certain number of vehicles were allocated to a particular group at all times. Also when allocating and reallocating vehicles between groups a record of the vehicle statistics 38 associated with a vehicle when transferred between groups could be noted. Thus for example, the amount of petrol in reallocated vehicles could be recorded so that a credit for any petrol in a vehicle 8 which was transferred to a different group could be awarded to the users associated with that group.

Although in the above described embodiment, user records 50 are described which associate a user with a single group, it will be appreciated that group data 56 for multiple groups could be included in a user record 50. Where a user record 50 included group data 56 for multiple groups, the operation of the booking module 25 would be such to permit a user associated with multiple user groups to book vehicles from locations associated with any of the multiple user groups. Thus for example a user associated with a user record containing group data 56 for two groups might be able to generate bookings to obtain vehicles 8 from locations associated with either group. Where those two groups corresponded to a general group and a group associated with a specific corporate location, such a user might be able to generate bookings to obtain a vehicle 8 from any general hire location associated with the general group as well as the specific corporate locations associated with the other group. Similarly where group data 36 in vehicle records 30 is used to restrict bookings to specific vehicles to certain groups of users, a user associated with multiple sets of group data would be able to generate bookings for any vehicles associated with any of the groups identified by the group data 56 of their user record 50.

The embodiments of the invention described herein comprise a logistics monitoring system and processes/methods performed using the monitoring system. The invention also extends, however, to computer programs, particularly computer programs on or in a carrier, adapted for putting the invention into practice. The program may be in the form of source or object code or in any other form suitable for use in the implementation of the processes according to the invention. The carrier can be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means.

When a program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes

## Claims

1. Apparatus (1) for monitoring the allocation of vehicles (8) to pick up locations comprising:
a location database (22) storing data (40) associating a plurality of locations with group data (46);
a vehicle database (20) storing data (30) associating vehicles (8) with location data (34);
a user database (24) storing data (50) associating individual users with group data (56);
a booking system (25,28) operable to generate booking records (60) recording bookings for the use of vehicles (8), wherein the booking system (25,28) is configured to restrict the generation of booking records (60) for the collection of vehicles (8) from specified locations by specified users on the basis of the group data (46,56) associated with users and locations by data (40,50) stored in the location database (22) and user database (24); and
an administrator module (26) operable to monitor the extent that vehicles (8) are required to be transferred to locations associated with group data in order to satisfy bookings recorded in the booking system (25,28) wherein the availability of a vehicle (8) for use at a particular location is determined on the basis of the location data (34) associated with the vehicle (8) and the booking records (60) generated by the booking system (25,28) indicative of the use of that vehicle (8).

2. The apparatus of claim 1 wherein said vehicle database (20) is further operable to associate vehicles (8) with group data (36) wherein said booking system is operable to restrict the generation of booking records (60) for the collection of vehicles (8) from specified locations by specified users on the basis of the group data (36,56) associated with a user and a vehicle (8) by data (30,50) stored in the vehicle database (20) and user database (24).

3. The apparatus of claim 1 or claim 2 wherein said booking system (25,28) is operable to determine whether a vehicle (8) suitable to fulfil a booking will be available for collection at a specified location and associate a specified vehicle (8) with a booking record if a suitable vehicle (8) is available or to cause a booking record (60) to be associated with data identifying that a vehicle (8) is yet to be associated with a booking.

4. The apparatus of any preceding claim wherein the administrator module (26) is operable to monitor the frequency with which vehicles (8) are required to be transferred to a location.

5. The apparatus of any preceding claim wherein the administrator module (26) is operable to monitor the extent of use of vehicles (8) allocated to a particular location.

6. A vehicle monitoring system comprising:
apparatus for monitoring the allocation of vehicles (8) to pick up locations in accordance with any preceding claim;
a plurality of vehicles (8) to be monitored by the apparatus, wherein each of the vehicles (8) is operable to generate data identifying a current location of the vehicle (8) and transmit said data to said apparatus and the apparatus for monitoring the allocation of vehicles (8) is operable to store said data as location data (34) associated with the vehicle (8).

7. The vehicle monitoring system of claim 6 wherein said apparatus for monitoring the allocation of vehicles (8) to pick up locations is operable to compare location data received from vehicles (8) and with data defining locations is said location database (22) and to associate a vehicle (8) with a location on the basis of the comparison.

8. The vehicle monitoring system of claim 7 wherein said apparatus for monitoring the allocation of vehicles (8) to pick up locations is operable to associate a vehicle (8) with a location on the basis of a comparison between location data received from a vehicle (8) and data defining a location in said location database (22) at a time determined on the basis of an end time for a booking associated with a vehicle (8) by a booking record (60) generated by said booking system (25,28).

9. The vehicle monitoring system of any of claims 6-8 wherein said user database (24) is operable to associate users with identification data (55) wherein each of said vehicles (8) is operable to check identification data (55) from a user and compare the identification data (55) with identification associated with a user making a booking to use the vehicle (8) at the beginning of a booking.

10. The vehicle monitoring system of claim 9 wherein said identification data (55) comprises a number encoded in an rf card (10) wherein each of said vehicles (8) further includes a reader operable to read an rf card (10) and is responsive to reading an encoded rf number to determine whether the rf card number is an rf card number associated with a user booked to use the vehicle at the beginning of a booking period.

11. The vehicle monitoring system of any of claims 6-10 wherein each of said plurality of vehicles (8) is operable to monitor readings indicating the operating statistics for the vehicle (8) and to transmit the readings to the apparatus for monitoring the allocation of vehicles (8) to pick up locations.

12. A computer readable medium storing computer implementable instructions which when interpreted by a programmable computer cause the computer to become configured as an apparatus (1) for monitoring the allocation of vehicles (8) to pick up locations in accordance with any of claims 1-5.
